# EUROPEAN PATENT APPLICATION

(11) **EP 2 375 758 A2**
(43) Date of publication of application: **12.10.2011**
(21) Application number: 11154790.7
(22) Date of filing: 17.02.2011
(51) Int. Cl.: H04N 13/00

(54) **Signal processing device, signal processing method, display device and program product**

(30) Priority: 05.04.2010 JP 2010087175
(71) Applicant: Sony Corporation, Tokyo 108-0075 (JP)
(72) Inventor: ARAI, Hideki, Minato-ku Tokyo 108-0075 (JP); CHIBA, Nobutane, Minato-ku Tokyo 108-0075 (JP); UEMURA, Yasuyuki, Minato-ku Tokyo 108-0075 (JP)
(74) Representative: Lewis, Darren John

(57) **Abstract**

A signal processing device includes a synchronization separation unit that separates horizontal and vertical synchronization signals from image signals, a dot counter which counts the number of dots of the image signals, a line counter which counts the number of lines of the image signals, a determination unit which determines the number of pixels in an image display area based on the number of dots and the number of lines, a control unit which controls the timing for shifting and outputting either of the left or the right image signal so that a left or a right image is displayed side by side in a display area in a size where a user can recognize the left or the right image among display areas in a display unit, and a first image signal shift unit which outputs the left or the right image signal to the display unit.

## Description

The present invention relates to a signal processing device, a signal processing method, a display device, and a program product that may be applied to, for example, the comparison of images output by two cameras capturing the same subject or a test image.

In the related art, there is a technology for generating 3D images that a user can view stereoscopically by using the images of the same subject captured by two cameras installed in accordance with the parallax of the user's left and right eyes. The images captured by the two cameras is called a left image and a right image for the left and right eyes of a user (hereinafter, the left image and the right image are collectively referred to as "left-right images"). Herein, if setting parameters such as color tones, luminance, capturing position, or the like of the left-right images do not match between two cameras, images are not able to be three-dimensionally displayed appropriately. For this reason, engineers operating cameras show left-right images on two monitors or the like arranged in the right-and-left or the up-and-down direction, respectively, and adjust the setting parameters comparing the left-right images.

Domestic Re-publication of PCT International Publication for Patent Application No. 2004/46789 discloses the technique that enables a stereoscopic view by arranging pixels for displaying left-right images so as to form a checkered pattern.

Incidentally, when the color tone or the like of the common subject in left-right images is to be adjusted, it is difficult to judge whether or not capturing parameters such as the color, the luminance, the focus, and the like are matched in regional parts of the left-right images only by simply arranging two monitors in the left-and-right or the up-and-down direction. In addition, the technique disclosed in PCT Japanese Translation Patent Application No. 2004-46789 aims to provide a stereoscopic view so as not to generate incompatibility in left-right images, and therefore, it is difficult to match the capturing parameters by displaying the left-right images in a size that a user can recognize.

Various respective aspects and features of the invention are defined in the appended claims. Combinations of features from the dependent claims may be combined with features of the independent claims as appropriate and not merely as explicitly set out in the claims.

Embodiments of the invention takes the above circumstance into consideration, and it is desirable to perform matching of left-right images captured by two cameras easily.

In an embodiment of the invention, respective horizontal and vertical synchronization signals are separated from a left image signal and a right image signal input from two cameras arranged with parallax.

The number of dots of the left image signal and the right image signal is counted for one horizontal period based on the horizontal synchronization signal, the number of lines of the left image signal and the right image signal is counted for one vertical period based on the horizontal synchronization signal and the vertical synchronization signal.

The number of pixels in an image display area for the input left image signal and the input right image signal is determined based on the number of dots for one horizontal period received from the dot counter and the number of lines for one vertical period received from the line counter. The following image signal is output in a display area of the display unit that displays left image with the left image signal and the right image with the right image signal based on the number of dots, the number of lines, and the image display area. In other words, a timing for shifting and outputting either of the left image signal or the right image signal is controlled so that a left image or a right image is displayed side by side in a display area which is defined with predetermined numbers of dots and lines and in a size where a user can recognize the left image or the right image displayed in a display unit.

The left image signal or the right image signal that is shifted is output to the display unit.

With the above configuration, right and left images can be displayed side by side in a display area in a size where a user can recognize the left image and the right image displayed in a display unit even when only one display unit is provided.

According to an embodiment of the invention, even when one display unit is provided, since a user can display left-right images side by side in display areas with a size where the user can recognize a left image or a right image displayed on the display unit, the user can easily compare differences in colors, luminance, focus and the like of a subject in the images. Accordingly, there is an effect that the setting of a camera capturing either image of the left-right images can be adjusted having the other image as reference.

Embodiments of the invention will now be described with reference to the accompanying drawings, throughout which like parts are referred to by like references, and in which:
Figs. 1A and 1B are illustrative diagrams showing examples of camera arrangements according to an embodiment of the invention;
Fig. 2 is a block diagram showing an example of the internal composition of a signal processing device according to the embodiment of the invention;
Figs. 3A and 3B are illustrative diagrams showing examples of a dot counter and a line counter counting the number of dots and the number of lines of an image signal according to the embodiment of the invention;
Figs. 4A to 4D are illustrative diagrams showing examples where left-right images are displayed in a checkered pattern according to the embodiment of the invention;
Fig. 5 is an illustrative diagram showing a display example of color bars according to the embodiment of the invention;
Fig. 6 is an illustrative diagram showing an example of displaying the color bars in a checkered pattern according to the embodiment of the invention;
Fig. 7 is an illustrative diagram showing a display example when the color bars are displayed in a checkered pattern and an image signal of one side is not output according to the embodiment of the invention; and
Figs. 8A to 8D are illustrative diagrams showing examples of displaying left-right images by changing the range thereof according to an embodiment of the invention.

Hereinbelow, exemplary embodiments (hereinafter, referred to as embodiments) of the invention will be described. The description will be provided in the order as below.
1. Embodiment (Control of Outputting Left-right Image Signals: Example of Displaying Left-right Images on a Display Unit in a Checkered Pattern)
2. Modified Example

### <1. Embodiment>

### [Example of Displaying Left-right Images on a Display Unit in a Checkered Pattern]

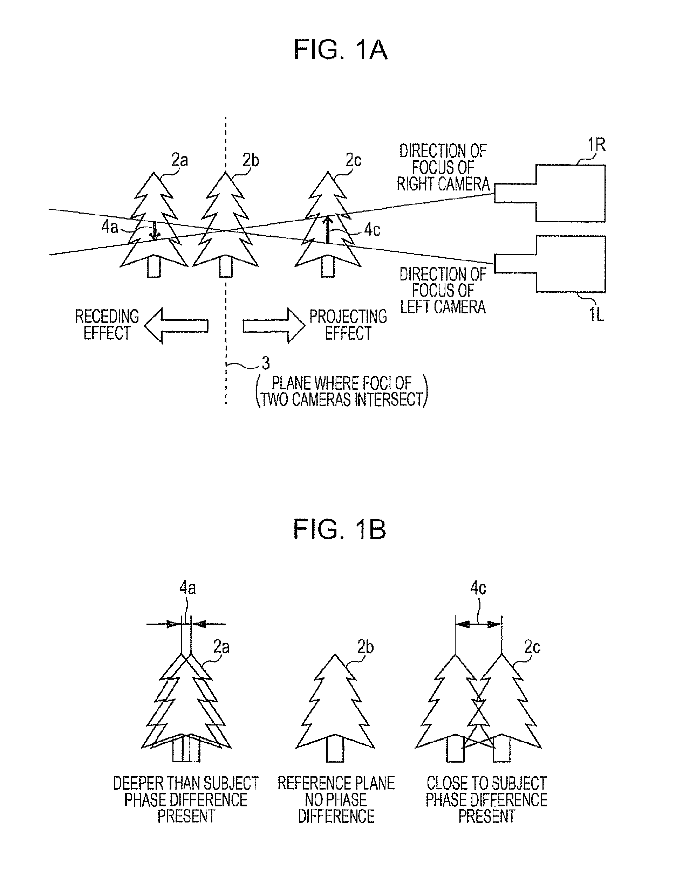

Hereinafter, an embodiment of the invention will be described with reference to Figs. 1A to 7. In the embodiment, description will be provided on a signal processing device 10 which causes left-right images to be displayed side by side in display areas obtained by partitioning a display unit 19 into a predetermined number and an example to which a signal processing method used in the device is applied. In addition, description is provided below on an example where the signal processing device 10 and the display unit 19 are separated, but embodiments of the invention may be applied to a display device into which the signal processing device 10 and the display unit 19 are incorporated.
Figs. 1A and 1B show examples where subjects appear differently by parallax.
Fig. 1A shows an example where two cameras 1L and 1R are arranged with the parallax.
Fig. 1B shows examples of the subjects with a receding effect and a projecting effect.

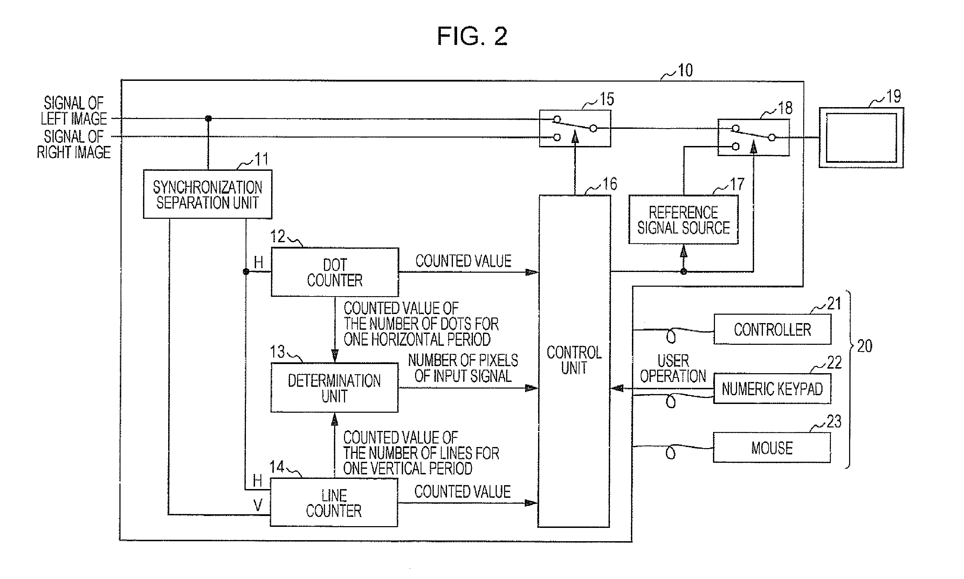

The camera 1L outputting left image signals and the camera 1R outputting right image signals are arranged side by side in the left-right direction with the parallax coinciding. The display unit 19 (refer to Fig. 2 to be described later) displays a left image by the left image signals and a right image by the right image signals. When the cross point of the cameras 1L and 1R in the focus direction is assumed to be a reference plane 3, the parallax 4 can be obtained from the angle of the cross point on the reference plane 3 formed in the focus direction of the cameras 1L and 1R.

Here, since a subject 2b is located on the reference plane 3, a user is not able to have a stereoscopic view even when seeing an image displayed on a 3D monitor not shown in the drawings. However, since a subject 2a is located far from the cameras 1L and 1R with respect to the reference plane 3, and a receding effect of parallax 4a occurs, the user views the subject 2a displayed on the 3D monitor as if the subject 2a is located deeper than the reference plane 3. On the other hand, since a subject 2c is located close to the cameras 1L and 1R with respect to the reference plane 3, and a projecting effect of parallax 4c occurs, the user can view the subject 2c displayed on the 3D monitor as if the subject is located closer than the reference plane 3 is.

Fig. 2 shows an example of the internal composition of the signal processing device 10.

The signal processing device 10 includes a synchronization separation unit 11 that separates horizontal and vertical synchronization signals from a left image signal and a right image signal input from the cameras 1L and 1R arranged with parallax. In addition, the signal processing device 10 includes a dot counter 12 that counts the number of dots (the number of pixels) of the left image signal and the right image signal for every one horizontal period based on the horizontal synchronization signal. Furthermore, the signal processing device 10 includes a line counter 14 that counts the number of lines in the vertical direction of the left image signal and the right image signal for every one vertical period based on the horizontal synchronization signal and the vertical synchronization signal. The present embodiment is based on the premise that the left image signal and the right image signal of Fig. 2 are synchronized with each other. Therefore, since the synchronization signal of the right image, the number of dots, the number of lines, and the number of pixels in an image area can be obtained only from the left image signal, the synchronization separation unit 11, the dot counter 12, the line counter 14, and the determination unit 13 can perform normal detection only with the input from the left image signal.

In addition, the signal processing device 10 includes the determination unit 13 that receives the number of dots for every one horizontal period from the dot counter 12 and the number of lines for every one vertical period from the line counter 14. The determination unit 13 determines the number of pixels for the input left image signal and the input right image signal in an image display area based on the received number of dots and lines. Generally, the number of pixels in an image display area that the determination unit 13 determined is equal to the number of pixels of a display unit 19. In the embodiment, the display unit 19 is assumed to be a 2D monitor constituted by 1920 pixels x 1080 lines, and the number of pixels in an image display area that the determination unit 13 determines is obtained from the result of 1920 pixels x 1080 lines.

Moreover, the signal processing device 10 includes a first image signal shift unit 15 that outputs a left image signal and a right image signal shifted by the control of a control unit 16 to the display unit 19. The first image signal shift unit 15 shifts and outputs a left image signal and a right image signal so that the left images and right images are displayed alternately in the display areas obtained by equally dividing the display unit 19 into a predetermined number. For this reason, the display unit 19 can display the left-right images side by side in the display areas obtained by partitioning the image display area that the determination unit 13 determines into a predetermined number.

Furthermore, the signal processing device 10 includes the control unit 16 that is input with the number of dots counted by the dot counter 12, the number of lines counted by the line counter 14, and the number of pixels of the left image signal and the right image signal in the image display area determined by the determination unit 13. The control unit 16 commands the first image signal shift unit 15 so that the left images and the right images are displayed side by side in display areas, which are defined by the predetermined number of dots and lines and have a size where a user can recognize the left images and the right images displayed in the display unit 19, among the display areas of the display unit. At this time, the control unit 16 controls the timing of the shifting and the outputting either of the left image signal or the right image signal.

Furthermore, the signal processing device 10 includes a reference signal source 17 that outputs a reference signal for displaying a reference image used for adjusting the left images and the right images by the control of the control unit 16. The reference signal source 17 outputs color bar signals and test pattern signals as a reference signal. In addition, the reference signal source 17 may output image signals that are the source of monochrome images such as black images, white images, or the like as the reference signal.

Furthermore, the signal processing device 10 includes a second image signal shift unit 18 that outputs to the display unit 19 an image signals of either of the left image signal or the right image signal output from the first image signal shift unit 15 replaced with a reference signal output from the reference signal source by the control unit 16. With the second image signal shift unit 18, either image of the right image or the left image can be displayed in the display unit 19 by being replaced with the reference image, or boundary lines can be displayed on boundaries of the left-right images in the display unit 19.

Furthermore, the signal processing device 10 includes an operation unit 20 that changes the display areas of the right image or the left image output to the display unit 19. The control unit 16 causes the first image signal shift unit to shift and output a right image signal or a left image signal in the display areas in which the range of the right images and the left images is changed when the operation unit 20 is operated to change the display areas of the right images and the left images. The operation unit 20 includes a controller 21 such as a jog dial or the like, a numeric keypad 22, and a mouse 23, and has a function of outputting an operation signal. When a user performs an input operation by using the operation unit 20, the operation signal is input to the control unit 16. Then, the control unit 16 changes the size of the left-right images or the like displayed in the display unit 19 according to the input operation.

The display unit 19 displays an on-screen menu. Then, a user commands an operation while seeing the on-screen menu. Items of the menu for causing the control unit 16 to perform the following operation are displayed on the on-screen menu. The details of the items are described below.

### (1) To select ON/OFF of checkered display

In the case of an ON state, the display unit 19 performs the checkered display. In the case of an OFF state, either images of the left-right images that are determined in advance are displayed in the display unit 19.

### (2) To select the number of dots in the horizontal direction of the checkered display

In the case of the checkered display, the number of dots in the horizontal direction within the display areas for displaying the left-right images can be selected by the mouse 23. Since the display areas are determined for the checkered display in advance, a user can change the width of the checkered display in the horizontal direction only by selecting the determined number of dots.

### (3) To key in the number of dots in the horizontal direction of the checkered display

In the case of the checkered display, the number of dots in the horizontal direction within the display areas for displaying the left-right images can be input by the numeric keypad 22. Thereby, minute areas can be designated to compare the left-right images.

### (4) To select the number of lines in the vertical direction of the checkered display

In the case of the checkered display, the number of lines in the vertical direction within the display areas for displaying the left-right images can be selected by the mouse 23. Since the display areas are determined for the checkered display in advance, a user can change the width of the checkered display in the vertical direction only by selecting the determined number of lines in advance.

### (5) To key in the number of lines in the vertical direction of the checkered display

In the case of the checkered display, the number of lines in the vertical direction within the display areas for displaying the left-right images can be input by the numeric keypad 22. Thereby, minute areas can be designated to compare the left-right images.

### (6) To select display or non-display of boundary lines when the checkered display is performed

It is possible to select whether the boundary lines are to be displayed or not to be displayed by the mouse 23 when the checkered display is performed.

### (7) To select the color of the boundary lines of the checkered display

It is possible to select the color of the boundary lines to be displayed by the mouse 23 when the checkered display is performed.

### (8) To select the thickness of the boundary lines of the checkered display

It is possible to select the thickness of the boundary lines to be displayed by the mouse 23 when the checkered display is performed.

### (9) To key in the thickness of the boundary lines of the checkered display

The thickness of the boundary lines to be displayed when the checkered display is performed can be input by the numeric keypad 22. Thereby, fine lines or thick lines can be displayed as the boundary lines.

### (10) To replace the locations of the left-right images of the checkered display

It is possible to replace and display the left-right images displayed side by side by the controller 21.

### (11) To shift the left image signal of the checkered display into the reference signal

The left images displayed in the display unit 19 can be replaced with the reference image by the mouse 23.

### (12) To shift the right image signal of the checkered display into the reference signal

The right image displayed in the display unit 19 can be replaced with the reference image by the mouse 23.

### (13) To select the color of the reference image

The color of the reference image displayed in the display unit 19 can be selected by the mouse 23. Thereby, the color of the reference image can be displayed after being changed not only into white or black but also into a variety of colors.

### (14) To select the level of the reference signal

The signal level of the reference image displayed in the display unit 19 can be selected by the mouse 23. Thereby, the reference image can be displayed after the luminance thereof is changed into the luminance determined in advance.

### (15) To key in the level of the reference signal

The signal level of the reference image displayed in the display unit 19 can be input by the numeric keypad 22. Thereby, the reference image can be displayed after the luminance thereof is changed a little in accordance with the luminance of the left-right images displayed in the display unit 19.

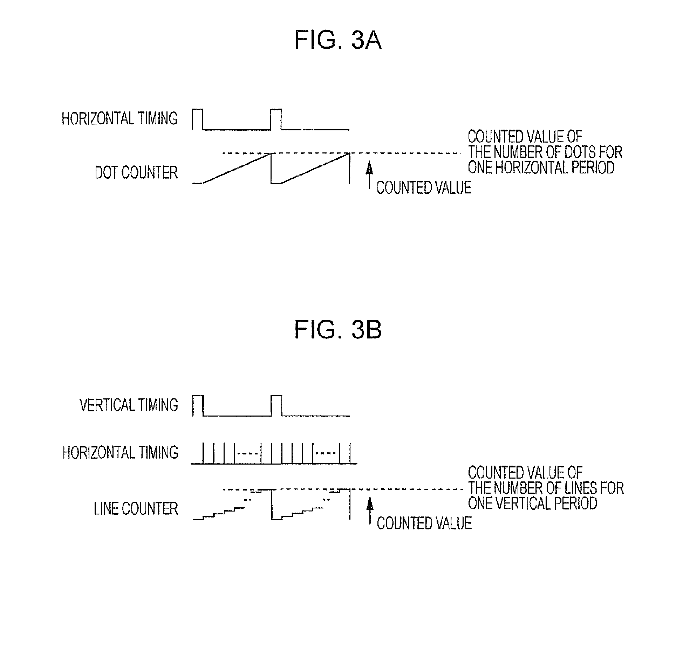

Figs. 3A and 3B show operation examples of the dot counter 12 and the line counter 14.
Fig. 3A shows an operation example of the dot counter 12.

The synchronization separation unit 11 separates a horizontal synchronization signal of left-right image signals input to the signal processing device 10 for each left-right image signal. A horizontal timing that defines one horizontal period is determined by the horizontal synchronization signal. For that reason, the horizontal synchronization signal is input to the dot counter 12 so as to count one line in the horizontal direction. The dot counter 12 counts the number of dots of the left-right image signal input for every one horizontal period, but the counting is reset according to a horizontal timing for every one horizontal period. Thereby, the dot counter 12 can count the number of dots for one horizontal period.

Fig. 3B shows an operation example of the line counter 14.

The line counter 14 is input with a horizontal synchronization signal and a vertical synchronization signal separated by the synchronization separation unit 11. Herein, a vertical timing that defines one screen (one field or one frame) is determined by a vertical synchronization signal. In addition, the vertical timing is defined by a plurality of horizontal periods for one screen.

The vertical synchronization signal is input to the line counter 14 for counting a plurality of lines in the vertical direction. The line counter 14 counts the number of lines of the input left-right image signal for every one screen. The counting is reset according to the vertical timing for every one vertical period. Thereby, the line counter 14 can count the number of lines for one vertical period.

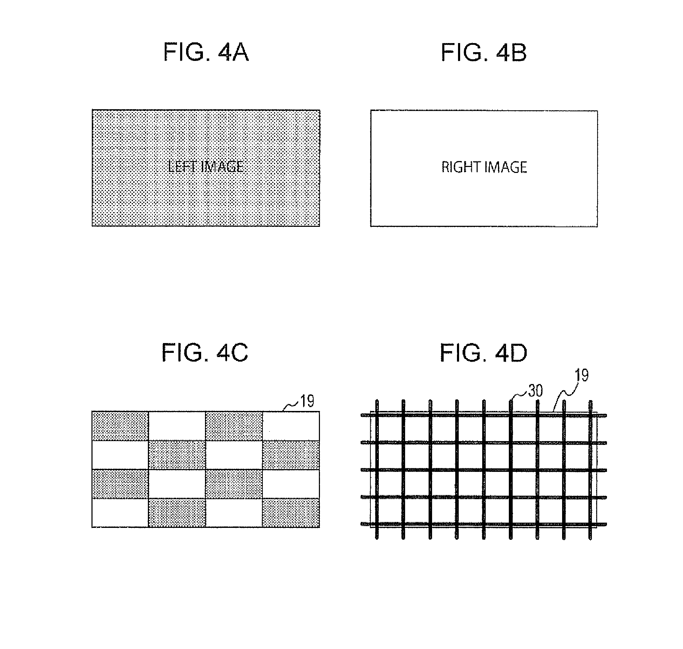

Figs. 4A to 4D show examples of the checkered display.

In order to facilitate regional comparison, the signal processing device 10 divides the left-right images into a plurality of rectangular shapes, arranges the left-right images in adjacent image areas alternately, and causes the display unit 19 to perform a checkered display. Thereby, half of the left-right images are thinned out for the display.
Fig. 4A shows an example of a left image displayed in the display unit 19 based on a left image signal input to the signal processing device 10.
Fig. 4B shows an example of a right image displayed in the display unit 19 based on a left image signal input to the signal processing device 10.
Figs. 4A and 4B show examples of a display with color-coding for emphasizing the differences in the left-right images, but actually, the subject captured by the cameras 1L and 1R is the same one, and thus, the disparity in color tones is small.
Fig. 4C shows an example of the left-right images in a checkered pattern displayed in the display unit 19.

In the embodiment, the left-right images are alternately displayed in display areas obtained by partitioning the display unit 19 into 4 segments x 4 segments (16 segments in total) in the vertical direction and the horizontal direction respectively. With the checkered display of the left-right images as such, a user can recognize the small disparity in color tones generated in the left-right images.

Fig. 4D shows an example of displaying boundary lines on boundaries of the left-right images in the checkered display.

In the embodiment, the boundary lines 30 are displayed splitting the display areas obtained by partitioning the display unit 19 into 4 segments x 8 segments (32 segments in total) in the vertical direction and the horizontal direction respectively.

With the display of the boundary lines 30 in the display unit 19, a user can easily recognize where the display areas of the left-right images are displayed.

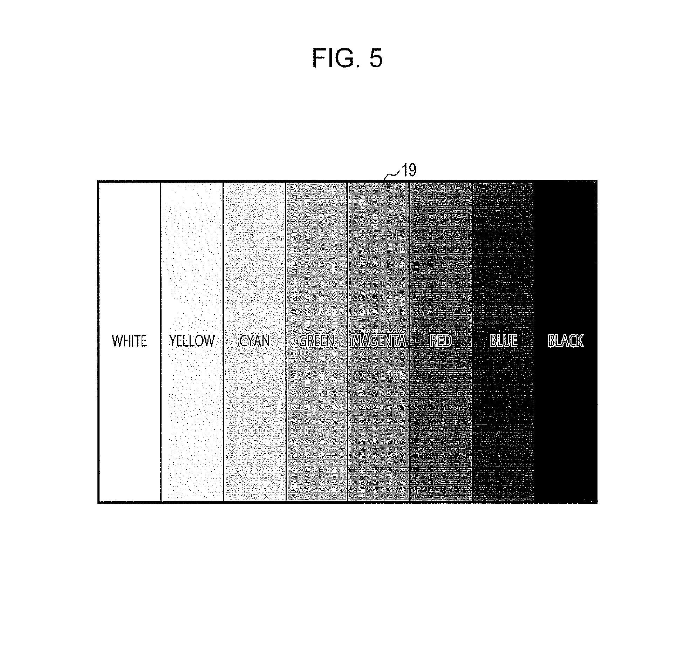

Fig. 5 shows an example of a color pattern image.

If the cameras 1L and 1R capture a color pattern image set for a test, the cameras 1L and 1R outputs the color pattern image respectively. The color patterns are used by having the colors thereof subjected to color-coding for each predetermined display area in the vertical direction in the order of white, yellow, cyan, green, magenta, red, blue, and black.

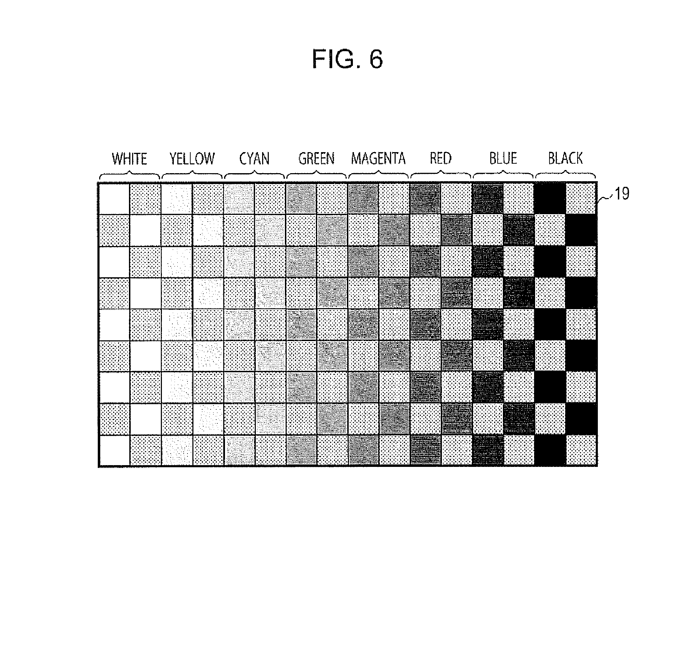

Fig. 6 shows an example where some images are skipped from the color pattern image.

In the embodiment, the left image is displayed in the display unit 19 based on the image signal output from the camera 1L. Then, the right image signal is skipped from the display area displaying the right image. At this time, the display unit 19 displays the left image in the checkered pattern. The size for dividing the left-right images to be displayed in the display unit 19 and the division location can be arbitrarily set. Thereby, an arbitrary location of the subject can be set on a boundary of the left-right images.

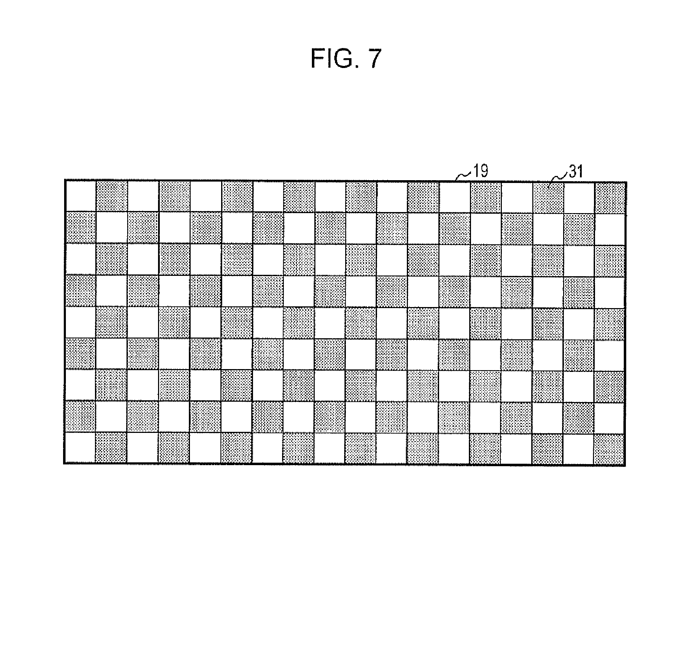

Fig. 7 shows an example of alternately displaying the color pattern image and the reference signal.

In the embodiment, the left image is displayed in the display unit 19 based on the image signal output from the camera 1L. On the other hand, a reference image 31 is displayed in the display areas displaying the right image based on the reference signal output from the reference signal source 17. The reference image 31 is displayed by being shaded for convenience, but when the camera 1L captures a white subject, the reference image may be displayed in white in accordance with the color of the subject. Accordingly, the exposure of the camera 1L can be adjusted in accordance with the reference image. In addition, when the camera 1R is to be adjusted, the reference image and the right image may be displayed in the display areas for displaying the left image. Thereby, the cameras 1L and the 1R can be adjusted together.

With the signal processing device 10 according to the embodiment described above, a user has few eye movements for the left-right images displayed in the display unit 19 side by side in comparison to a case where the left-right images are matched by using two monitors in the related art. The differences in colors, the luminance, and the like of the left-right images is easily compared by displaying the left-right images in the display unit 19 used as a 2D monitor in a checkered pattern. With the alternate display of the left-right images in the display areas obtained by partitioning the display unit 19 as such, there is an effect that various parameters such as color tones of the left-right images and the like can be easily matched.

In addition, since the cameras 1L and 1R have parallax, when the same subject is captured, deviation occurs in the subject displayed in the display unit 19. However, the signal processing device 10 obtains an image with the same quality by changing various parameters for the cameras 1L and 1R without altering the parallax. For this reason, the parameters of the cameras 1L and 1R can be easily set with the left-right images displayed in a size that a user can recognize.

In addition, the signal processing device 10 still performs a process for left-right image signals for a 2D display. Hence, the function of the signal processing device 10 is useful when the device is installed not only in a monitor but also in a 3D signal processing equipment other than a monitor.

In addition, the cameras 1L and 1R are used for capturing 3D images, but a monitor capable of providing 3D display is not necessary to recognize images of the cameras 1L and 1R. For this reason, a user can recognize the left-right images displayed in the display unit 19 with the naked eye, thereby convenience is enhanced.

In addition, the reference signal output from the reference signal source 17 can be output to the display unit 19 by shifting either of the right image signal or the left image signal. For this reason, the cameras 1L and 1R can be adjusted in accordance with the reference image displayed based on the reference signal, and the color tone of the left-right images and the like can be changed.

### <2. Modified Example>

In the embodiment described above, the left-right images are divided into a plurality of rectangular shapes, and thinned out for display so as to be arranged in a checkered pattern, but the display areas may be arbitrarily changed to display any image of the right image or the left image. For example, it is effective to compare the left-right images by performing PinP (Picture in Picture) display with designation of a picture in another side by a pointing device or the like, without displaying the picture in a predetermined form such as a checkered pattern. In this case, the image in another side can be displayed having the PinP, which is designated to be open, as a window, without touching the entire display of the left-right images. Herein, an example of changing the display areas of the left-right images by a user's operation of the mouse 23 will be described.

As described above, the on-screen menu is displayed in the display unit 19. Then, a user commands the operation by observing the on-screen menu. On the on-screen menu, menu items for causing the control unit 16 to operate as follows are displayed in addition to the menu items from (1) to (15) as described above. Details of the items are described as below.

### (16) To designate a display area for the left image with the mouse 23 (the right image in a case of no designation)

When the rim of an area for displaying the left image is designated with the mouse 23, the size of the designated display area for the left image can be changed.

### (17) To designate a right image signal area with the mouse 23 (the left image in a case of no designation)

When the rim of an area for displaying the right image is designated with the mouse 23, the size of the designated display area for the right image can be changed.

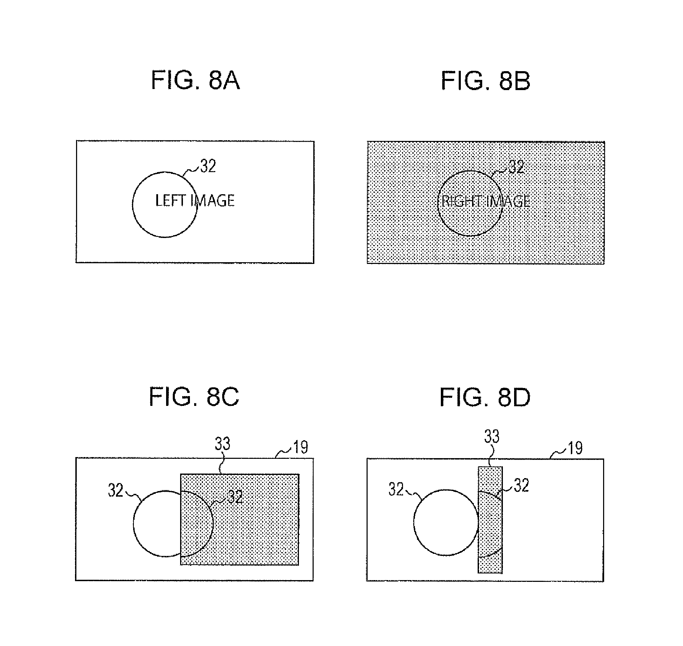

Figs. 8A to 8D show an example of a case where the display area for displaying the left-right images is changed.
Fig. 8A shows an example of the left image obtained after the camera 1L captures a subject 32.
Fig. 8B shows an example of the right image obtained after the camera 1R captures the subject 32.

Since the cameras 1L and 1R are installed with parallax, the locations of the left-right images of the subject 32 are slightly different in the horizontal direction.
Fig. 8C shows a first example where a display area 33 of the right image displayed in the display unit 19 is changed.
Fig. 8D shows a second example where the display area 33 of the right image displayed in the display unit 19 is changed.

If a user changes the size of the display area 33 for displaying the right image using the mouse 23, the right image is displayed in accordance with the display area 33.

At this time, the left image also is displayed, but the contours of the subject 32 of the left-right images do not coincide with each other due to the parallax. However, only a part of the display area where a user wants to recognize the color tones of the image can be specified, and the left-right images can be matched based on the relationship with other parts.

In addition, when PinP is performed, a user can execute such displays by selecting a template in an arbitrary shape from templates prepared in advance. In such a case, the template may not be limited to a rectangular shape, but may be used in various shapes such as circles, ovals, polygons, and the like.

In addition, the signal processing device 10 according to the above described embodiments can be incorporated into a display device. With the display device provided with the display unit 19, left-right images can be directly displayed based on left-right image signals input from the cameras 1L and 1R. In this case, the device can be miniaturized and light-weighted by integrating the signal processing device 10 and the display unit 19, and thereby the color matching of the cameras 1L and 1R in outdoor photographing can be easily performed.

In addition, a recording medium for recording program codes of software that realizes the functions of the above-described embodiments can be supplied to the cameras 1L and 1R. Furthermore, needless to say, the functions are realized when the control unit 16 reads the program codes stored in the recording medium for execution.

As a recording medium for providing the program codes in such a case, for example, flexible discs, hard discs, optical discs, magneto-optic discs, CD-ROMs, CD-Rs, magnetic tapes, nonvolatile memory cards, ROMs, or the like can be used.

In addition, the functions of the above-described embodiments can be realized by executing the program codes read by the control unit 16. Moreover, an OS operated on the control unit 16 can perform a part or the whole of an actual process based on the instruction of the program codes. A case where the functions of the above-described embodiments are realized with the process is also included.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present application contains subject matter related to that disclosed in Japanese Priority Patent Application JP 2010-087175 filed with the Japan Patent Office on April 5, 2010, the entire contents of which are hereby incorporated by reference.

In addition, the invention is not limited to the above-described embodiments, and various applicable examples and modified examples can be adopted.

## Claims

1. A signal processing device comprising:
a synchronization separation unit that separates respective horizontal and vertical synchronization signals from a left image signal and a right image signal input from two cameras arranged with parallax;
a dot counter which counts the number of dots of the left image signal and the right image signal for one horizontal period based on the horizontal synchronization signal;
a line counter which counts the number of lines of the left image signal and the right image signal for one vertical period based on the horizontal synchronization signal and the vertical synchronization signal;
a determination unit which determines the number of pixels in an image display area for the input left image signal and the input right image signal based on the number of dots for one horizontal period received from the dot counter and the number of lines for one vertical period received from the line counter;
a control unit which controls a timing for shifting and outputting either of the left image signal or the right image signal so that a left image or a right image is displayed side by side in a display area which is defined with predetermined numbers of dots and lines and in a size where a user can recognize the left image or the right image displayed in a display unit among display areas in the display unit for displaying the left image with the left image signal and the right image with the right image signal based on the number of dots that the dot counter counts, the number of lines that the line counter counts, and the number of pixels in the image display area that the determination unit determines; and
a first image signal shift unit which outputs the left image signal and the right image signal shifted by the control of the control unit to the display unit.

2. The signal processing device according to Claim 1, wherein the first image signal shift unit shifts and outputs the left image signal and the right image signal so that the left image and the right image are alternately displayed in the display areas obtained by equally dividing the display unit into a predetermined number.

3. The signal processing device according to Claim 2, further comprising:
a reference signal source which outputs a reference signal for displaying a reference image used in adjusting the left image or the right image by the control of the control unit; and
a second image signal shift unit which outputs either image of the left image signal or the right image signal output from the first image signal shift unit after replacing with the reference signal output from the reference signal source by the control of the control unit.

4. The signal processing device according to Claim 3, further comprising:
an operation unit which changes the display areas of a right image or a left image output to the display unit,
wherein the control unit causes the first image signal shift unit to shift and output the right image signal and the left image signal in a display area in which the range of the right image and the left image is changed when the operation unit operates to change the display areas of the right image or the left image.

5. The signal processing device according to Claim 4, wherein the reference signal source outputs a color bar signal or a test pattern signal as the reference signal.

6. A signal processing method comprising the steps of:
separating respective horizontal and vertical synchronization signals from a left image signal and a right image signal input from two cameras arranged with parallax;
counting the number of dots of the left image signal and the right image signal for one horizontal period based on the horizontal synchronization signal;
counting the number of lines of the left image signal and the right image signal for one vertical period based on the horizontal synchronization signal and the vertical synchronization signal;
determining the number of pixels in an image display area for the input left image signal and the input right image signal based on the number of dots for one horizontal period received from the dot counter and the number of lines for one vertical period received from the line counter;
controlling a timing for shifting and outputting either of the left image signal or the right image signal so that a left image or a right image is displayed side by side in a display area which is defined with predetermined numbers of dots and lines and in a size where a user can recognize the left image or the right image displayed in a display unit among display areas in the display unit for displaying the left image with the left image signal and the right image with the right image signal based on the number of dots, the number of lines, and the number of pixels in the image display area; and
outputting the left image signal or the right image signal that is shifted to the display unit.

7. A display device comprising:
a synchronization separation unit that separates respective horizontal and vertical synchronization signals from a left image signal and a right image signal input from two cameras arranged with parallax;
a dot counter which counts the number of dots of the left image signal and the right image signal for one horizontal period based on the horizontal synchronization signal;
a line counter which counts the number of lines of the left image signal and the right image signal for one vertical period based on the horizontal synchronization signal and the vertical synchronization signal;
a determination unit which determines the number of pixels in an image display area for the input left image signal and the input right image signal based on the number of dots for one horizontal period received from the dot counter and the number of lines for one vertical period received from the line counter;
a display unit which displays a left image with the left image signal and a right image with the right image signal;
a control unit which controls a timing for shifting and outputting either of the left image signal or the right image signal so that a left image or a right image is displayed side by side in a display area which is defined with predetermined numbers of dots and lines and in a size that a user can recognize the left image or the right image displayed in the display unit among display areas in the display unit based on the number of dots that the dot counter counts, the number of lines that the line counter counts, and the number of pixels in the image display area that the determination unit determines; and
a first image signal shift unit which outputs the left image signal and the right image signal shifted by the control of the control unit to the display unit.

8. A program product which causes a computer to execute procedures of:
separating respective horizontal and vertical synchronization signals from a left image signal and a right image signal input from two cameras arranged with parallax;
counting the number of dots of the left image signal and the right image signal for one horizontal period based on the horizontal synchronization signal;
counting the number of lines of the left image signal and the right image signal for one vertical period based on the horizontal synchronization signal and the vertical synchronization signal;
determining the number of pixels in an image display area for the input left image signal and the input right image signal based on the number of dots for one horizontal period received from the dot counter and the number of lines for one vertical period received from the line counter;
controlling a timing for shifting and outputting either of the left image signal or the right image signal so that a left image or a right image is displayed side by side in a display area which is defined with predetermined numbers of dots and lines and in a size that a user can recognize the left image or the right image displayed in a display unit among display areas in the display unit for displaying the left image with the left image signal and the right image with the right image signal based on the number of dots, the number of lines, and the number of pixels in the image display area; and
outputting the left image signal or the right image signal that is shifted to the display unit.
